# EUROPÄISCHE PATENTSCHRIFT

(11) **EP 3 678 844 B1**
(45) Veröffentlichungstag und Bekanntmachung des Hinweises auf die Patenterteilung: **28.02.2024**
(21) Anmeldenummer: 18749753.2
(22) Anmeldetag: 27.07.2018
(51) Int. Cl.: B29C 49/80, B29C 49/10, F15B 19/00, G01L 19/00, B29C 49/36

(54) **VERFAHREN ZUR LECKAGE-ERKENNUNG IN EINER VORRICHTUNG ZUM UMFORMEN VON BEHÄLTER-VORFORMLINGEN**
METHOD FOR LEAKAGE DETECTION IN A DEVICE FOR SHAPING CONTAINER PREFORMS
PROCÉDÉ POUR LA DÉTECTION DE FUITES DANS UN DISPOSITIF POUR LE FORMAGE DE PRÉFORMES DE RÉCIPIENTS

(30) Priorität: 04.09.2017 DE 102017215461
(43) Veröffentlichungstag der Anmeldung: 15.07.2020
(73) Patentinhaber: Krones AG, 93073 Neutraubling (DE)
(72) Erfinder: PHILIPP, Thomas, 93073 Neutraubling (DE); AUST, Robert, 93073 Neutraubling (DE); KITZINGER, Thomas, 93073 Neutraubling (DE); FINGER, Dieter, 93073 Neutraubling (DE); RAUSCHENDORFER, Thomas, 93073 Neutraubling (DE)
(74) Vertreter: Grünecker Patent- und Rechtsanwälte PartG mbB
(86) Internationale Anmeldenummer: PCT/EP2018/070409
(87) Internationale Veröffentlichungsnummer: WO 2019/042675

(56) Entgegenhaltungen:
- DE-A1- 10 247 167
- DE-A1-102014 009 991
- DE-U1-202015 106 917
- US-A- 3 072 959
- US-A1- 2008 184 781

## Beschreibung

Die Anmeldung betrifft ein Verfahren zur Leckage-Erkennung in einer Vorrichtung zum Umformen von Behälter-Vorformlingen.

Zur Herstellung von Behältern, beispielsweise Flaschen, kommen vor allem bei Kunststoffbehältern Vorrichtungen zum Einsatz, die einen Behälter-Vorformling durch Beaufschlagung mit Druckluft umformen, so dass das Material die Form des Behälters annimmt. Beispielsweise werden die Vorformlinge erwärmt und in eine Form geblasen. Dabei können die Vorformlinge beispielsweise, wie bei einer Streckblasmaschine, noch mit einer Reckstange gestreckt werden.

Beim Umformen mit Druckluft gibt es typischerweise mehrere Behandlungsstationen (auch Blasstationen genannt), wobei an jeder Behandlungsstation je ein Vorformling umgeformt wird. Die Druckluftzufuhr erfolgt meist von einer Druckluftquelle, beispielsweise einem Kompressor, aus über einen Druckluftverteiler, beispielsweise einen Drehverteiler. Die Dichtungen des Druckluftverteilers sind stark belastete Bauteile, da sie der unter hohem Druck transportierten Druckluft standhalten müssen. Daher werden die Dichtungen aufgrund von Verschleiß mit der Zeit undicht, es tritt eine Leckage auf. Auch in anderen Bereichen kann Leckage auftreten, beispielsweise an Ventilen oder Verbindungsstücken.

Derzeit wird die Leckage typischerweise nur erkannt, wenn aufgrund der Leckage austretende Luft ein Pfeifen hervorruft. Dann ist jedoch der Druckverlust unter Umständen schon so stark, dass die Produktion möglichst sofort zur Wartung unterbrochen werden muss. Durch den Produktionsausfall können hohe Kosten entstehen.

Eine beispielhafte Erkennung von Leckagen ist aus der DE 20 2015 106 917 U1 bekannt. Weitere Verfahren und/oder Vorrichtungen zur Leckage-Erkennung sind beispielsweise aus der DE 10 2014 009 991 A1, DE 102 47 167 A1 und US 2008/0184781 A1 bekannt. Dabei offenbart die DE 10 2014 009 991 A1 ein Verfahren und eine Vorrichtung zur Fehlererkennung in Druckluftsystemen. Die DE 102 47 167 A1 offenbart eine Dichtprüfeinrichtung und ein Verfahren zur Dichtheitsprüfung. Die US 2008/0184781 A1 offenbart ein Verfahren zum Testen eines Fluidversorgungssystems.

Bevor die Leckage erkannt wird kann die Umformung der Behälter, beispielsweise der Streckblasprozess, noch weiter funktionieren, solange die Druckluftquelle noch genügend Druckluft nachliefern kann. In diesem Zeitraum läuft also die Umformung weiter, aber der Energieverbrauch der Druckluftquelle, beispielsweise des Druckluftkompressors, ist deutlich erhöht.

Somit ist die Gesamteffektivität der Anlage beeinträchtigt und Produktionskosten sind hoch.

Es ist also Aufgabe der Erfindung, ein Verfahren zur Leckage-Erkennung in einer Vorrichtung zum Umformen von Behälter-Vorformlingen bereit zu stellen, welches erlaubt, durch Leckage bedingte Erhöhung der Produktionskosten und Effektivitätseinbußen zu reduzieren.

Die Aufgabe wird mit den Merkmalen der unabhängigen Ansprüchen gelöst.

Aufgrund der Leckage-Prüffahrt kann systematisch nach etwaiger Leckage im System gesucht werden. Insbesondere kann eine solche Leckage-Prüffahrt zu geplanten Zeitpunkten außerhalb der Produktionszeiten im Rahmen geplanter Produktionsunterbrechungen zur Prüfung und Wartung der Vorrichtung durchgeführt werden. Bei einer solchen Unterbrechung können neben der Prüfung auf Leckage auch andere Bauteile geprüft werden, beispielsweise im Falle einer Streckblasmaschine die Reckstangenspitzen.

Somit kommt es nicht zu zusätzlichen und ungeplanten Produktionsunterbrechungen. Außerdem kann bei regelmäßigen geplanten Prüfungen die Leckage frühzeitig entdeckt werden, bevor diese durch ein Pfeifen akustisch wahrnehmbar wird, insbesondere auch, wenn die Leckage noch nicht stark ausgeprägt ist. Undichte Ventile können dann ausgetauscht und/oder andere Leckagen behoben werden. Somit werden Kosten gespart, die sonst durch erhöhten Energieverbrauch der Druckluftquelle auftreten würden. Insgesamt werden also die Kosten reduziert und die Effektivität erhöht.

Dadurch, dass für die Bereiche einzeln/separat bestimmt wird, ob Druckluft entweicht, kann erkannt werden, wo im System die Leckage auftritt und eine gezielte Behebung des Problems ist möglich. Insbesondere kann gegebenenfalls erkannt werden, ob die Leckage aufgrund von bestimmten undichten Ventilen oder sonstiger Undichtigkeit im System auftritt. Beispielsweise kann bei einer Blasmaschine mit einem Drehverteiler, Domdruckregelventilen, Ringkanälen und/oder Blasblockventilen der Blasstationen bestimmt werden, ob und welche Ventile betroffen sind und/oder ob der Drehverteiler zu einer Leckage führt und/oder ob das Druckluftsystem anderweitig undicht ist.

Bei der Druckluftquelle kann es sich beispielsweise um einen Druckluftkompressor handeln. Die Absperrelemente können beispielsweise Ventile, insbesondere Domdruckregelventile und/oder Blasblockventile an Blasstationen und/oder einen Druckluftverteiler, beispielsweise einen Drehverteiler, umfassen.

Beispiele für die Bereiche sind beispielsweise ein Bereich zwischen dem Druckluftverteiler und den Domdruckregelventilen, zwischen den Domdruckregelventilen und den Blasblockventilen, insbesondere Ringkanäle, ein Niederdruckbereich oder ein Bereich zwischen der Druckquelle bzw. Absperrelementen der Druckquelle und den Domdruckregelventilen, also einen Bereich, in dem der Druckluftverteiler angeordnet ist.

Dass zwei Bereiche fluidisch verbunden sind soll hier nicht ausschließen, dass zwischen den beiden Bereichen noch andere Bereiche oder Absperrelemente angeordnet sind, solange grundsätzlich eine Verbindung vorliegt. Mit "abgeterennt" ist gemeint, dass Bereiche fluidisch abgetrennt werden, insbesondere, dass ein eine fluidische Verbindung zwischen den Bereichen abgesperrt wird.

Als eine Leckage-Prüffahrt wird eine Sequenz von Prüfschritten bezeichnet, in der mindestens in zwei der Bereiche separat bestimmt wird, ob daraus Druckluft entweicht. Die Prüffahrt wird automatisch durchgeführt. Das heißt, dass nach dem Start der Prüffahrt die Auswahl und Reihenfolge von Prüfschritten der Prüffahrt ohne Zutun eines Benutzers erfolgen kann. Insbesondere können alle Schritte (gegebenenfalls nach einem Starten der Prüffahrt durch einen Benutzer) ohne Benutzereingriff ausgeführt werden. Dass die Prüffahrt automatisch durchgeführt wird, schließt jedoch nicht aus, dass ein Benutzer die Prüffahrt startet oder beendet oder zwischen den Prüfschritten an einer Bedienkonsole bestätigt, dass der nächste Schritt ausgeführt werden soll.

Das Steuern der Absperrelemente kann insbesondere ein Öffnen oder Schließen der Absperrelemente umfassen. Das Steuern der Druckluftzufuhr in das Druckluftsystem kann das Steuern des Betriebs der Druckluftquelle und/oder das Einstellen von Ventilen, beispielsweise Sperrventilen und/oder Regelventilen, zwischen der Druckluftquelle und dem Druckluftsystem umfassen.

Das Bestimmen, ob Druckluft aus einem zu prüfenden Bereich entweicht, kann anhand des zeitlichen Verlaufs des Luftdrucks in diesem Bereich und/oder in einem an diesen Bereich angrenzenden Bereich erfolgen.

Unter Umständen kann das Messen des zeitlichen Verlaufs des Luftdrucks in nur einem Bereich, bei geeigneter Schaltung und Druckluftbeaufschlagung, Rückschlüsse auf zwei Bereiche zulassen, nämlich auf den Bereich selbst und auf einen direkt daran angrenzenden Bereich. Dies ist vorteilhaft, weil die Anzahl der Drucksensoren niedrig gehalten werden kann und da Bereiche, in die Drucksensoren nicht oder nur schwer eingebracht werden können, dennoch auf Leckage untersucht werden können.

Die Prüffahrt kann umfassen, dass der jeweils zu prüfende Bereich mit Druckluft beaufschlagt und von den anderen Bereichen und der Umgebung abgetrennt wird und dass, während der zu prüfende Bereich abgetrennt ist, der zeitliche Verlauf des Luftdrucks in diesem Bereich oder in einem an diesen Bereich angrenzenden Bereich bestimmt wird. Die Bestimmung des zeitlichen Verlaufs des Luftdrucks kann anhand von Messwerten eines oder mehrerer in dem zu prüfenden Bereich und/oder einem angrenzenden Bereich angeordneten Drucksensoren durchgeführt werden. Bei den Drucksensoren kann es sich beispielsweise um analoge Drucksensoren handeln.

Insbesondere kann bestimmt werden, dass aus dem zu prüfenden Bereich Druckluft entweicht, wenn der Luftdruck in diesem Bereich absinkt, beispielsweise in einem vorgegebenen Messzeitraum unter einen vorgegebenen Grenzwert sinkt und/oder mit einer Rate sinkt, die größer ist als ein vorgegebener Grenzwert, und/oder wenn das Verhältnis von Druckverlust und einem vorgegebenen Druckwert, beispielsweise einem Solldruckwert, oder einem gemessenen Druckwert, beispielsweise dem Druckwert zu Beginn der Messung, größer ist als ein vorgegebener Grenzwert.

Alternativ oder zusätzlich kann bestimmt werden, dass aus dem zu prüfenden Bereich Druckluft in einen daran angrenzenden Bereich entweicht, wenn der Luftdruck in dem daran angrenzenden Bereich (ohne sonstige Einwirkung auf diesen angrenzenden Bereich) ansteigt, beispielsweise über einen vorgegebenen Grenzwert ansteigt (insbesondere in einem vorgegebenen Messzeitraum) und/oder mit einer Rate steigt, die größer ist als ein vorgegebener Grenzwert, und/oder wenn das Verhältnis von Druckanstieg und einem vorgegebenen Druckwert, beispielsweise einem Solldruckwert, oder einem gemessenen Druckwert, beispielsweise dem Druckwert zu Beginn der Messung, größer ist als ein vorgegebener Grenzwert. Wenn aus dem zu prüfenden Bereich Druckluft in den angrenzenden Bereich entweicht, bedeutet dies, dass das Absperrelement zwischen dem zu prüfenden und dem daran angrenzenden Bereich undicht ist.

Wenn die oben beschriebenen Grenzwerte eingehalten werden, wird im Folgenden davon gesprochen, dass der Luftdruck in einem vorgegebenen Toleranzbereich liegt.

Insbesondere kann ein Bereich mit Druckluft beaufschlagt und von den anderen Bereichen und der Umgebung abgetrennt werden und der zeitlichen Verlauf des Luftdrucks in diesem Bereich und in einem an diesen Bereich angrenzenden Bereich bestimmt werden.

Wenn der jeweilige zeitliche Verlauf ergibt, dass aus dem zu prüfenden Bereich Druckluft entweicht und in einen daran angrenzenden Bereich Druckluft (ohne sonstige Einwirkung auf diesen angrenzenden Bereich) einströmt, bedeutet dies, dass das Absperrelement zwischen dem zu prüfenden und dem daran angrenzenden Bereich undicht ist.

Wenn der jeweilige zeitliche Verlauf ergibt, dass aus dem zu prüfenden Bereich Druckluft entweicht aber in einen daran angrenzenden Bereich keine Druckluft (ohne sonstige Einwirkung auf diesen angrenzenden Bereich) einströmt, bedeutet dies, dass das Absperrelement zwischen dem zu prüfenden und dem daran angrenzenden Bereich dicht ist und die Druckluft anderweitig entweicht. Die Druckluft entweicht also an anderer Stelle, beispielsweise in andere angrenzende Bereiche und/oder die Umgebung. Wird dies festgestellt, kann die Prüffahrt umfassen, Absperrelemente zu den anderen angrenzenden Bereichen zu prüfen, beispielsweise indem der zeitliche Verlauf des Luftdrucks in den anderen angrenzenden Bereichen bestimmt wird.

Der zeitliche Verlauf des Luftdrucks in dem zu prüfenden Bereich kann mit dem zeitlichen Verlauf des Luftdrucks in einem daran angrenzenden Bereich verglichen werden und anhand des Vergleichs kann bestimmt werden, ob ein Druckabfall in dem zu prüfenden Bereich ausschließlich durch Entweichen von Druckluft in den daran angrenzenden Bereich, ausschließlich durch Entweichen von Druckluft in die Umgebung und/oder andere angrenzende Bereiche oder teilweise durch Entweichen von Druckluft in den angrenzenden Bereich und in andere angrenzende Bereiche und/oder die Umgebung zustande kommt.

Dies ermöglicht eine sehr präzise Diagnose, wo die Leckage entsteht.

Es sei angemerkt, dass bei einer Leckage-Prüffahrt mehrere, insbesondere auch alle, Bereiche geprüft werden können, aber nicht zwangsläufig alle Bereiche geprüft werden müssen.

Prüfdaten der Prüffahrt, insbesondere die Messwerte für den Luftdruck in verschiedenen Bereichen, den daraus bestimmten zeitlichen Verlauf und gegebenenfalls auch daraus gezogene Schlussfolgerungen, dass und/oder wo eine Undichtigkeit vorliegt, können gespeichert werden. Dann kann ein Benutzer durch spätere Auswertung herausfinden, wie der Zustand des Druckluftsystems ist, und eine Diagnose durchführen. Alternativ oder zusätzlich kann zumindest ein Teil der Prüfdaten während der Prüffahrt an eine Benutzerschnittstelle ausgegeben werden, so dass der Benutzer unter Umständen in die Prüffahrt eingreifen kann, beispielsweise diese unterbrechen oder abbrechen. Insbesondere kann für den Fall, dass bestimmt wird, dass aus einem Bereich Druckluft entweicht, automatisch eine Meldung ausgegeben werden, die einem Bediener der Vorrichtung Handlungsbedarf anzeigt.

Die Prüffahrten können regelmäßig in Form von Prüfzyklen durchgeführt werden. Eine Prüffahrt kann beispielsweise immer nach einer vorgegebenen Anzahl an Betriebsstunden, beispielsweise nach 1500 Betriebsstunden, durchgeführt werden. Alternativ oder zusätzlich kann eine Prüffahrt, insbesondere wiederholt, in Standby-Phasen der Vorrichtung durchgeführt werden. Ein solches Langzeitmonitoring ermöglicht, durch Beobachtung von Veränderungen der Leckagewerte zu diagnostizieren, welche Teile von Verschleiß betroffen sind.

Die Prüffahrt kann umfassen, dass anhand von Prüfdaten eines Prüfungsschritts der Prüffahrt automatisch, beispielsweise mittels einer Steuereinrichtung, bestimmt wird, welcher Prüfungsschritt als nächstes durchzuführen ist. Dazu können beispielsweise Entscheidungsregeln hinterlegt sein, die auf die Prüfdaten angewendet werden. Die Entscheidungsregeln können auch ein oder mehrere Abbruchkriterien umfassen und, sofern die Prüfdaten eines Prüfungsschritts eines der Abbruchkriterien erfüllen, kann die Prüffahrt automatisch abgebrochen werden.

Beispielsweise kann eine Prüffahrt unterbrochen werden, wenn aus einem Bereich Druckluft entweicht und im Rahmen der Prüffahrt nicht bestimmt werden kann, wohin die Druckluft entweicht. In einem solchen Fall kann unter Umständen das Fortsetzen der Prüffahrt bedeutungslos sein, wenn die weiteren Prüfungsschritte davon abhängen, dass bekannt ist, wohin die Druckluft entweicht.

Die Prüffahrt zur Leckage-Erkennung kann eine Prüfung der Dichtigkeit der Domdruckregelventile und/oder eine Prüfung der Dichtigkeit von Blasblockventilen von Behandlungsstationen, beispielsweise Blasstationen, und/oder eine Prüfung eines Druckluftverteilers und/oder eine Prüfung eines Niederdruckbereichs umfassen. Insbesondere können erst eine Prüfung der Domdruckregelventile und anschließend eine Prüfung der Blasblockventile erfolgen.

Die Prüfung der Dichtigkeit der Domdruckregelventile kann umfassen, dass die Domdruckregelventile geschlossen werden und anschließend der an die Domdruckregelventile angrenzende Bereich entlüftet und wieder geschlossen wird, insbesondere der Bereich mit den Ringkanälen bis zu den Behandlungsstationen. Anschließend wird der Luftdruck in dem direkt an die Domdruckregelventile angrenzenden Bereich, beispielsweise in den Ringkanälen, gemessen, insbesondere der zeitliche Verlauf des Luftdrucks.

Wenn der Luftdruck in dem direkt an die Domdruckregelventile angrenzenden Bereich konstant bleibt oder zumindest in einem vorgegebenen Toleranzbereich liegt, so gilt das Domdruckregelventil als dicht. Wenn der Luftdruck in dem direkt an die Domdruckregelventile angrenzenden Bereich steigt (auf einen Wert außerhalb des Toleranzbereichs), so gilt das Domdruckregelventil als undicht. Aus dem Druckanstieg kann nämlich geschlossen werden, dass Druckluft durch das Domdruckregelventil in diesen Bereich entweicht, so dass dort der Luftdruck ansteigt.

Die Prüfung der Dichtigkeit der Blasblockventile in den Blasstationen, die insbesondere im Anschluss an die Prüfung der Dichtigkeit der Domdruckregelventile erfolgen kann, umfasst, dass die Blasblockventile geschlossen werden und der Bereich unmittelbar vor den Blasblockventilen, beispielsweise die Ringkanäle, mit Druckluft beaufschlagt werden, was beispielsweise durch Öffnen der Domdruckregelventile erfolgen kann. Anschließend wird dieser Bereich wieder abgeschlossen, beispielsweise die Domdruckregelventile geschlossen. Dann wird der Luftdruck in diesem Bereich gemessen, insbesondere der zeitliche Verlauf des Luftdrucks. Wenn der Luftdruck in diesem Bereich konstant bleibt oder zumindest in einem vorgegebenen Toleranzbereich liegt, so gelten die Blasblockventile als dicht. Wenn der Luftdruck (auf einen Wert außerhalb des Toleranzbereichs) absinkt (vorausgesetzt, dass die Domdruckregelventile dicht sind), so gilt, dass die Blasblockventile undicht ist. Aus dem Druckabfall kann nämlich geschlossen werden, dass Druckluft durch die Blasblockventile der Behandlungsstation entweicht.

Es ist unwahrscheinlich, dass sowohl die Domdruckregelventile als auch die Blasblockventile der Blasstationen bei derselben Prüffahrt undicht sind. Sollte dies jedoch der Fall sein und sofern die Undichtigkeit der Domdruckregelventile in einem ersten Schritt erkannt wurde, so kann diese bekannte Undichtigkeit bei der Prüfung der Dichtigkeit der Blasblockventile berücksichtigt werden.

Es ist in einem solchen Fall auch denkbar, dass eine Warnung an einen Benutzer ausgegeben wird, so dass der Benutzer entscheiden kann, die Domdruckregelventile auszutauschen, bevor die Prüffahrt fortgesetzt wird.

Alternativ oder zusätzlich kann der Bereich zwischen der Druckluftquelle und den Domdruckregelventilen geprüft werden, wobei hierzu dieser Bereich komplett abgetrennt, insbesondere alle Domdruckregelventile geschlossen werden, und mit Druckluft beaufschlagt wird und anschließend die Verbindung zur Druckluftquelle abgesperrt wird. Durch Messen des Luftdrucks in diesem Bereich kann eine Leckage erkannt werden, beispielsweise wenn dieser auf einen Wert außerhalb eines Toleranzbereichs absinkt. Insbesondere wird dieser Prüfungsschritt nach dem Prüfen der Domdruckregelventile durchgeführt, da dann diese dann idealerweise bereits als Leckage-Stelle ausgeschlossen werden können.

Insgesamt stellen alle Prüfverfahren eine Näherung dar, denn Leckage kann auch bei anderen Bauteilen liegen. Druckluft könnte beispielsweise auch an falsch montierten oder defekten Schläuchen und Verbindungselementen entweichen. Der Druckluftverteiler und die Ventile sind jedoch so stark belastete Bauteile, dass die Wahrscheinlichkeit, dass die Leckage dort auftritt deutlich höher ist. Daher ist die Näherung ausreichend genau.

Die Erfindung stellt auch eine Vorrichtung nach Anspruch 9 bereit. Die Vorrichtung umfasst eine Steuereinrichtung, die zum, insbesondere automatischen, Durchführen eine Leckage-Prüffahrt ausgebildet ist, indem sie mindestens eines der Absperrelemente und/oder die Druckluftzufuhr in das Druckluftsystem derart steuert, dass für jeden Bereich separat bestimmbar ist, ob daraus Druckluft entweicht.

Das Steuern der Absperrelemente kann ein Öffnen oder Schließen der Absperrelemente umfassen. Das Steuern der Druckluftzufuhr in das Druckluftsystem kann das Steuern des Betriebs der Druckluftquelle und/oder das Einstellen von Ventilen, beispielsweise Sperrventilen und/oder Regelventilen, zwischen der Druckluftquelle und dem Druckluftsystem umfassen.

Die Vorrichtung kann in mindestens einem der Bereiche einen Drucksensor umfassen, der zum Erfassen des Luftdrucks in diesem Bereich ausgebildet ist. Insbesondere kann die Vorrichtung auch in mehreren, insbesondere allen Bereichen Drucksensoren aufweisen. Wie oben bereits angemerkt, kann unter Umständen auch das Messen des zeitlichen Verlaufs des Luftdrucks in nur einem Bereich Rückschlüsse auf zwei Bereiche zulassen, nämlich auf den Bereich selbst und auf einen direkt daran angrenzenden Bereich. Dies ist vorteilhaft, weil die Anzahl der Drucksensoren niedrig gehalten werden kann und da Bereiche, in die Drucksensoren nicht oder nur schwer eingebracht werden können, dennoch auf Leckage untersucht werden können.

Die Vorrichtung enthält eine Datenverbindung zwischen dem mindestens einen Drucksensor und der Steuereinrichtung wobei die Vorrichtung insbesondere derart ausgebildet ist, dass die Steuereinrichtung über die Datenverbindung Messwerte von den Drucksensoren empfängt. Die Steuereinrichtung kann insbesondere derart ausgebildet sein, dass sie die Absperrelemente und/oder die Druckluftzufuhr gemäß den oben im Zusammenhang mit dem Verfahren beschriebenen Schritten steuert, und insbesondere die Prüfdaten gemäß dem oben beschriebenen Verfahren verarbeitet.

Im den folgenden Absätzen wird beispielhaft beschrieben, wie eine Vorrichtung zum Unformen von Behälter-Vorformlingen ausgebildet sein kann.

Bei der Vorrichtung zum Umformen von Kunststoffvorformlingen zu Kunststoffbehältnissen kann es sich beispielsweise um eine Blasmaschine handeln. Dies bedeutet, dass die Kunststoffvorformlinge zunächst in einer Heizstrecke thermisch konditioniert und anschließend durch Beaufschlagung mit einem flüssigen oder gasförmigen Medium expandiert werden. Das fließfähige Medium steht bevorzugt unter Druck. Für die Zuführung des unter Druck stehenden Mediums weist Vorrichtung eine Blasdüse auf, welche an eine Mündung der Kunststoffvorformlinge dichtend anlegbar ist, um die Kunststoffvorformlinge so mit flüssigem oder gasförmigem Medium zu expandieren. Daneben ist bevorzugt auch eine Ventilanordnung vorgesehen, welche die Zuführung der Blasluft an die Kunststoffvorformlinge steuert.

Insbesondere kann es sich bei der Blasmaschine um eine Streckblasmaschine handeln, was bedeutet, dass die Vorformlinge vor und/oder während der Expansion mittels einer Reckstange in Längsrichtung gedehnt werden. Die Blasstationen weisen dabei jeweils Reckstangen auf, welche in die Kunststoffvorformlinge einführbar sind und die Kunststoffvorformlinge in ihrer Längsrichtung dehnen. Die Reckstangen weisen dabei bevorzugt einen elektrischen Antrieb auf.

Bei einer vorteilhaften Ausführungsform ist eine Vielzahl von Blasstationen an einem gemeinsamen beweglichen Träger angeordnet. Bei diesem Träger handelt es sich dabei insbesondere um einen drehbaren Träger. Die Blasstationen weisen jeweils eine Blasformeinrichtung auf, welche bevorzugt einen Hohlraum ausbilden, innerhalb dessen die Kunststoffvorformlinge zu den Kunststoffbehältnissen expandierbar sind. Diese Blasformeinrichtungen sind dabei bevorzugt mehrteilig ausgebildet und weisen zwei Blasformhälften und eine Bodenform auf. Bevorzugt sind diese Blasformhälften lösbar an einer Formträgerschale oder an den Blasformträgern angeordnet. Die Blasformträger sind bezüglich einander schwenkbar sind, um die Blasformeinrichtungen zu öffnen und zu schließen. Zudem weist der Blasformträger Verriegelungsmechanismen auf, um die Formhälften während des Blasvorgangs gegeneinander zu verriegeln.

Besonders bevorzugt ist die Blasmaschine bzw. sind der Träger und die Blasformanordnungen innerhalb eines Reinraums angeordnet, welcher die Blasformmaschine gegenüber einer unsterilen Umgebung abgrenzt. Antriebseinrichtungen für die Verschließung, Verriegelung und/oder Öffnung der Blasformen sind dabei bevorzugt außerhalb des Reinraums angeordnet.

Die Blasformeinrichtungen werden bevorzugt innerhalb des Reinraums transportiert. Der Reinraum wird bevorzugt von mehreren Wandungen begrenzt. Bevorzugt wird der Reinraum dabei von wenigstens einer stehenden Wandung und einer sich gegenüber dieser stehenden Wandung bewegenden Wandung begrenzt. Der Reinraum grenzt die Blasformen insbesondere von einer unsterilen Umgebung ab. Vorteilhaft ist der Reinraum ring- oder torusartig um die Blasstationen bzw. Umformungsstationen und/oder den Transportpfad der Kunststoffbehältnisse ausgebildet.

Es versteht sich, dass die verschiedenen Merkmale, insbesondere die Merkmale, die die Prüffahrt betreffen, auch mit anderweitig ausgebildeten Vorrichtungen zum Unformen von Behälter-Vorformlingen kombinierbar sind.

Die Erfindung betrifft auch eine Verwendung einer der oben beschriebenen Vorrichtungen zur Durchführung eines der oben beschriebenen Verfahren.

Es versteht sich, dass die im Zusammenhang mit dem Verfahren beschriebenen Merkmale und Vorteile ebenfalls für die Vorrichtung zutreffen und auf diese anwendbar sind.

Weitere Merkmale und Vorteile der Erfindung werden im Folgenden anhand der Figuren beschrieben. Dabei zeigen:
- Figur 1: eine schematisches Diagramm einer Vorrichtung zum Umformen von Behälter-Vorformlingen;
- Figuren 2a bis 2d: verschiedene Schaltungen der Elemente im Druckluftsystem für die Prüfung verschiedener Bereiche des Druckluftsystems.

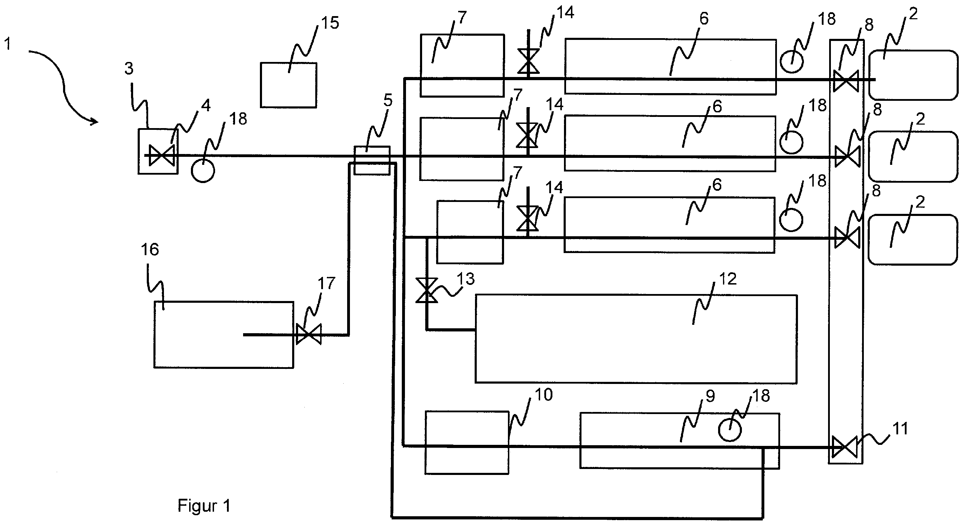

In Figur 1 ist ein schematisches Diagramm einer Vorrichtung 1 zum Umformen von Behälter-Vorformlingen, beispielsweise in Form einer Streckblasmaschine, mit mehreren Behandlungsstationen 2, hier insbesondere Blasstationen, gezeigt. An den Behandlungsstationen wird im Normalbetrieb in einen erwärmten Vorformling Druckluft geblasen, wodurch an einer Station je ein Vorformling zu einem Behälter umgeformt wird.

Die Vorrichtung umfasst ein Druckluftsystem, das an eine Druckluftquelle 3, hier in Form eines Druckluftkompressors, angeschlossen ist. Dabei kann die Druckluftzufuhr von der Druckluftquelle in das Druckluftsystem mittels eines Ventils 4 der Druckluftquelle gesperrt werden.

Das Druckluftsystem umfasst hier einen Drehverteiler 5 als Druckluftverteiler, Ringkanäle 6, die zwischen Domdruckregelventilen 7 und Blasblockventilen 8 angeordnet sind, einen Ringkanal 9, der zwischen einem Domdruckregelventil 10 und Blasblockventilen 11 angeordnet ist, einen Niederdruckbereich 12 und ein Niederdruckbereich-Ventil 13. Dabei können einem Ringkanal jeweils so viele Blasblockventile zugeordnet sein, wie die Vorrichtung Behandlungsstationen aufweist. Jeder der Ringkanäle kann ein Entlüftungsventil 14 aufweisen. Weiterhin ist eine Steuereinrichtung 15 gezeigt. Optional kann auch ein externer Verbraucher 16 über ein Verbraucherventil 17 mit dem Druckluftsystem verbunden sein. Die drei Ringkanäle 6 können beispielsweise jeweils zur Zufuhr der Vorblasluft, der Zwischenblasluft oder der Fertigblasluft im Streckblasprozess vorgesehen sein.

Der Ringkanal 9 kann als Zwischenspeicher für die recycelbare Druckluft verwendet werden. Der Speicher wird durch die recycelte Luft aus den Blasstationen sowie aus dem Hochdrucksystem versorgt. Das Hochdrucksystem kann den Speicher kontrollieren, damit die externe Versorgung immer gewährleistet ist. Sprich, eine durchgehende Versorgung des externe Verbrauchers ist gewährleistet, selbst im Standby Modus, wenn es keine recycelte Luft gibt.

Der Niederdruckbereich kann für Steuerluft der Ventile sowie der Ansteuerung verschiedener Pneumatikzylinder vorgesehen sein. Es ist möglich, Luftrecycling durchzuführen, indem durch Öffnen des Verbraucherventils 17 der Ringkanal 9 mit dem Verbraucher 16 verbunden wird. Die Anzahl und Art der Kanäle und Ventile und die Art des Druckluftverteilers sind dabei rein beispielhaft und kann auch anders gewählt werden.

Wie hier erkennbar ist, umfasst das Druckluftsystem mehrere fluidisch verbundene und mittels Absperrelementen, hier beispielsweise den Ventilen 7, 10 oder 13, voneinander abtrennbar sind und mittels Absperrelementen, hier beispielsweise den Ventilen 8, 11 oder 14 von der Umgebung abtrennbare Bereiche umfasst.

Die hier gezeigten Ventile können jeweils durch nicht gezeigte Antriebe automatisch betätigbar sein und die Antriebe können über eine (nicht dargestellte) Datenverbindung mit der Steuereinrichtung verbunden und durch die Steuereinrichtung derart steuerbar sein, dass die Ventile geöffnet oder geschlossen werden. Optional kann auch die Druckluftquelle über eine Datenverbindung mit der Steuereinrichtung verbunden und durch diese steuerbar sein, insbesondere einschaltbar, ausschaltbar und gegebenenfalls in der Leistung verstellbar. Alternativ oder zusätzlich kann das Ventil 4 der Druckluftquelle mit der Steuereinrichtung verbunden und durch diese steuerbar sein.

Die Steuereinrichtung ist zur automatischen Durchführen eine Leckage-Prüffahrt ausgebildet, indem sie mindestens eines der Ventile und/oder die Druckluftquelle derart steuert, dass für verschiedene Bereiche des Druckluftsystems separat bestimmbar ist, ob daraus Druckluft entweicht. Beispielsweise kann die Steuereinrichtung dazu ein Steuerprogramm ausführen und entsprechende Steuersignale an die Ventile und/oder die Druckluftquelle senden.

Weiterhin sind hier Drucksensoren 18 gezeigt, die beispielsweise in Form analoger Drucksensoren ausgebildet sein können. Die Drucksensoren sind mittels Datenverbindungen mit einer Recheneinrichtung, die insbesondere Teil der Steuereinrichtung sein kann, verbunden und senden im Betrieb Messwerte an diese Recheneinrichtung.

Mittels der Messwerte kann dann während der Prüffahrt oder nach der Prüffahrt bestimmt werden, ob und wo eine Leckage vorliegt. Wenn die Bestimmung während der Prüffahrt erfolgt, kann die Auswahl und Reihenfolge der Prüfschritte von dieser Bestimmung abhängen.

Optional kann ein hier nicht gezeigtes Benutzerterminal vorgesehen sein, auf dem Informationen zu der laufenden Prüffahrt dargestellt werden, beispielsweise ein Hinweis auf eine Leckage, und/oder der Benutzer Eingaben vornehmen kann, beispielsweise Eingaben, mit denen eine Prüffahrt gestartet, unterbrochen, abgewandelt oder beendet wird.

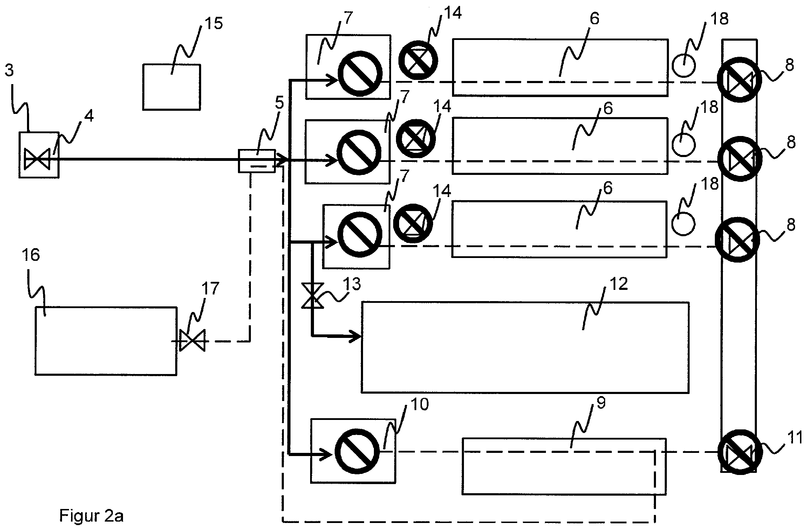

Anhand der Figuren 2a bis 2d wird nun ein beispielhaftes Verfahren zur Leckage-Erkennung in einer Vorrichtung zum Umformen von Behälter-Vorformlingen erläutert, wobei die Prüffahrt mehrere Prüfungsschritte aufweist. Zum besseren Verständnis sind in den jeweiligen Figuren immer nur die Drucksensoren eingetragen, die gerade aktiv verwendet werden. Das Verfahren wird hier mit einer Vorrichtung wie in Figur 1 gezeigt durchgeführt. Dieses oder ein vergleichbares Verfahren kann jedoch auch an anderen, vergleichbaren Vorrichtungen durchgeführt werden, die ein Druckluftsystem umfassen, das an eine Druckluftquelle angeschlossen ist und mindestens zwei fluidisch verbundene und mittels Absperrelementen voneinander und/oder von der Umgebung abtrennbare Bereiche umfasst.

Bei dem hier beschriebenen Verfahren wird eine Leckage-Prüffahrt automatisch durchgeführt, beispielsweise gesteuert durch die oben beschriebene Steuereinrichtung. Dabei werden verschiedene Absperrelemente, beispielsweise die oben beschriebenen Ventile, und die Druckluftzufuhr in das Druckluftsystem, beispielsweise die oben beschriebene Druckluftquelle, derart gesteuert, dass für jeden Bereich separat bestimmbar ist, ob daraus Druckluft entweicht.

Bei der hier beschriebenen Prüffahrt werden zunächst die Domdruckregelventile 7, anschließend die Blasblockventile 8, anschließend der Bereich zwischen der Druckluftquelle und den Domdruckregelventilen und dem Niederdruckbereich-Ventil, welches der erste Kreis des Drehverteilers ist. Anschließend daran wird der Bereich, auch als zweiter Kreis des Drehverteilers bezeichnet, zwischen dem Domdruckregelventil 10 und dem Blasblockventil 11 (also im Bereich des Ringkanals 9) sowie zwischen dem Ringkanal 9 und dem Verbraucherventil. Hier sei angemerkt, dass bei einer Prüffahrt nicht jeder dieser Prüfungsschritte durchgeführt werden muss und dass auch andere Prüfungsschritte oder eine andere Reihenfolge der Prüfungsschritte möglich sind.

Die Prüfung der Dichtigkeit der Domdruckregelventile umfasst, dass die Domdruckregelventile geschlossen werden und anschließend der an die Domdruckregelventile 7 angrenzende Bereich entlüftet und wieder geschlossen wird, insbesondere der Bereich mit den Ringkanälen 6, der sich von den Domdruckregelventilen bis zu den Blasblockventilen 8 erstreckt. Im Anschluss daran sind die Ringkanäle also, sofern die Domdruckregelventile schließen, im Wesentlichen konstant auf Umgebungsdruck. Dies ist in Figur 2a schematisch angedeutet, indem in diesem Bereich eine gestreichelte Linie eingetragen ist. Die Beaufschlagung mit Druckluft wird hier mit Pfeilen angedeutet. Wenn der Bereich der Ringkanäle abgetrennt ist, wird der Luftdruck dort gemessen, insbesondere der zeitliche Verlauf des Luftdrucks.

Wenn der Luftdruck konstant oder in einem bestimmten Toleranzbereich bleibt, so gilt das Domdruckregelventil als dicht. Wenn der Luftdruck jedoch auf einen Wert außerhalb des Toleranzbereichs steigt, so gilt das Domdruckregelventil als undicht.

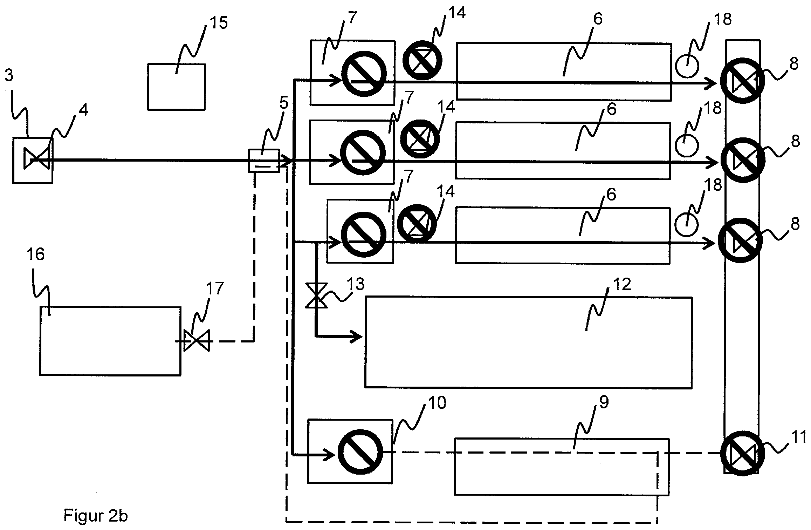

Die Prüfung der Dichtigkeit der Blasblockventile in den Blasstationen, die insbesondere im Anschluss an die Prüfung der Dichtigkeit der Domdruckregelventile erfolgen kann, umfasst, dass die Blasblockventile geschlossen werden und der Bereich vor den Blasblockventilen, beispielsweise die Ringkanäle, mit Druckluft beaufschlagt werden, was beispielsweise durch Öffnen der Domdruckregelventile erfolgen kann. Anschließend wird dieser Bereich wieder abgeschlossen, beispielsweise die Domdruckregelventile geschlossen. Dies ist in Figur 2b gezeigt. Dann wird der Luftdruck in diesem Bereich gemessen, insbesondere der zeitliche Verlauf des Luftdrucks. Wenn der Luftdruck in diesem Bereich konstant bleibt oder in einem bestimmten Toleranzbereich liegt, so gelten die Blasblockventile als dicht. Wenn der Luftdruck auf einen Wert außerhalb des Toleranzbereichs absinkt (vorausgesetzt, dass die Domdruckregelventile dicht sind), so gelten die Blasblockventile als undicht. Aus dem Druckabfall kann nämlich geschlossen werden, dass Druckluft durch die Ventile in der Blasstation entweicht.

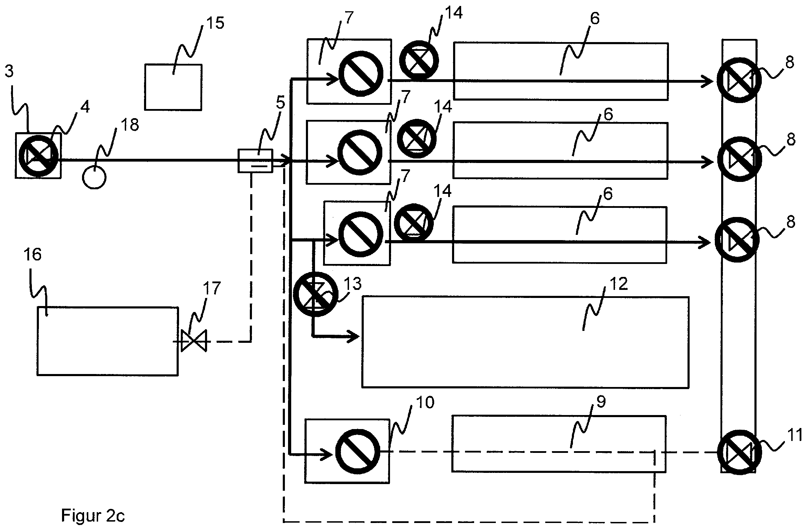

Die Prüfung der Dichtigkeit eines Bereichs zwischen der Druckluftquelle und den Domdruckregelventilen und dem Niederdruckbereich-Ventil ist in Figur 2c angedeutet. Diese kann beispielsweise im Anschluss an die oben beschriebenen Schritte erfolgen. Dazu bleiben (oder werden) alle Domdruckregelventile geschlossen und, sofern ein Niederdruckbereich vorhanden ist, wird das Niederdruckbereich-Ventil ebenfalls geschlossen und der Bereich wird mit Druck beaufschlagt. Anschließend wird die Druckluftzufuhr durch Schließen des Ventils 4 der Druckluftquelle unterbrochen. Ein Drucksensor, der beispielsweise zwischen der Druckluftquelle und dem Drehverteiler oder an einer anderen Stelle in dem Bereich angeordnet ist, misst den Luftdruck bzw. zeitlichen Verlauf des Luftdrucks. Wenn der Druck auf einen Wert absinkt, der außerhalb eines vorgegebenen Toleranzbereichs liegt, liegt eine Leckage in diesem Bereich vor.

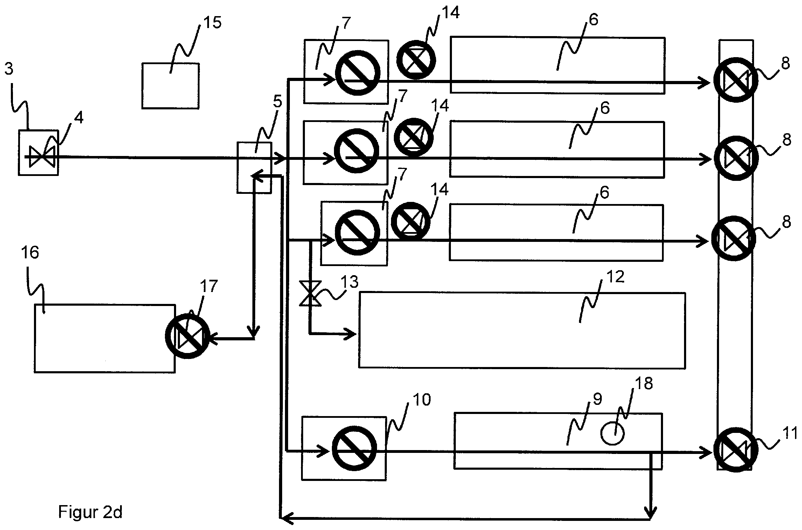

Die Prüfung des Bereichs zwischen dem Domdruckregelventil 10 und dem Blasblockventil 11 (also im Bereich des Ringkanals 9) sowie zwischen dem Ringkanal 9 und dem Verbraucherventil 17 ist in Figur 2d schematisch gezeigt. Diese kann insbesondere nach den oben beschriebenen Prüfungs-Schritten erfolgen. Hier wird das Verbraucherventil geschlossen und das Domdruckregelventil 10 zunächst geöffnet. Dann wird der Ringkanal 9 sowie der Bereich zwischen dem Ringkanal 9 und dem Verbraucherventil 17 mit Druckluft beaufschlagt. Anschließend wird das Domdruckregelventil 10 wieder geschlossen und der Luftdruck, insbesondere der zeitliche Verlauf, wird im Bereich des Ringkanals 9 gemessen. Wenn der Druck auf einen Wert absinkt, der außerhalb eines vorgegebenen Toleranzbereichs liegt, liegt eine Leckage in diesem Bereich vor.

Es ist in einem solchen Fall auch denkbar, dass unmittelbar nach jedem Prüfschritt eine Rückmeldung an einen Benutzer ausgegeben wird, insbesondere eine Warnung, falls eine Leckage detektiert wird, so dass ein Benutzer entscheiden kann, die Prüffahrt zu unterbrechen und insbesondere die Domdruckregelventile oder die Blasblockventile auszutauschen oder andere undichte Stellen abzudichten bevor die Prüffahrt fortgesetzt wird, oder gegebenenfalls die Prüffahrt abzubrechen.

Die oben beschriebenen Merkmale sind ebenfalls anwendbar auf diverse andere Vorrichtungen, insbesondere verschiedene zusätzliche oder andere bzw. anders angeordnete Bereiche und Elemente, beispielsweise Ventile, Verbindungen oder Luftbehälter. Insbesondere sind die obigen Merkmale auch für etwaige Erweiterungen oder Aufsätze der Vorrichtung anwendbar.

## Patentansprüche

1. Verfahren zur Leckage-Erkennung in einer Vorrichtung (1) zum Umformen von Behälter-Vorformlingen umfassend ein Druckluftsystem, das an eine Druckluftquelle (3) angeschlossen ist und mindestens zwei fluidisch verbundene und mittels Absperrelementen (7, 10, 13, 8, 11, 14) voneinander und/oder von der Umgebung abtrennbare Bereiche umfasst,
**gekennzeichnet durch**
eine durch eine Steuereinrichtung (15) durchgeführte Leckage-Prüffahrt, bei der mindestens eines der Absperrelemente (7, 10, 13, 8, 11, 14) und/oder die Druckluftzufuhr in das Druckluftsystem derart gesteuert werden, dass für jeden Bereich separat bestimmbar ist, ob daraus Druckluft entweicht,
wobei die Prüffahrt umfasst, dass der jeweils zu prüfende Bereich mit Druckluft beaufschlagt und von den anderen Bereichen und der Umgebung abgetrennt wird und dass, während der zu prüfende Bereich abgetrennt ist, der zeitliche Verlauf des Luftdrucks in dem zu prüfenden Bereich oder in einem bzw. dem mindestens einen an den zu prüfenden Bereich angrenzenden Bereich mittels Messwerten von einem oder mehreren in dem zu prüfenden bzw. in dem angrenzenden Bereich angeordneten Drucksensoren (18) bestimmt wird, und wobei die Steuereinrichtung (15) die Messwerte von dem mindestens einen Drucksensor (18) über eine Datenverbindung empfängt.

2. Verfahren nach Anspruch 1, wobei die Leckage-Prüffahrt automatisch durchgeführt wird.

3. Verfahren nach Anspruch 2, umfassend einen Bestimmungsschritt, bei dem bestimmt wird, dass aus dem zu prüfenden Bereich Druckluft entweicht, wenn der Luftdruck in diesem Bereich absinkt, beispielsweise in einem vorgegebenen Messzeitraum unter einen vorgegebenen Grenzwert sinkt und/oder mit einer Rate sinkt, die größer ist als ein vorgegebener Grenzwert, und/oder wenn das Verhältnis von Druckverlust und einem vorgegebenen Druckwert, beispielsweise einem Solldruckwert, oder einem gemessenen Druckwert, beispielsweise dem Druckwert zu Beginn der Messung, größer ist als ein vorgegebener Grenzwert.

4. Verfahren nach einem der Ansprüche 2 oder 3, umfassend einen Bestimmungsschritt, bei dem bestimmt wird, dass aus dem zu prüfenden Bereich Druckluft in einen daran angrenzenden Bereich entweicht, wenn der Luftdruck in dem daran angrenzenden Bereich ansteigt, beispielsweise über einen vorgegebenen Grenzwert ansteigt und/oder mit einer Rate steigt, die größer ist als ein vorgegebener Grenzwert, und/oder wenn das Verhältnis von Druckanstieg und einem vorgegebenen Druckwert, beispielsweise einem Solldruckwert, oder einem gemessenen Druckwert, beispielsweise dem Druckwert zu Beginn der Messung, größer ist als ein vorgegebener Grenzwert.

5. Verfahren nach Anspruch 4, umfassend einen Bestimmungsschritt, bei dem bestimmt wird, dass das Absperrelement (7, 10, 13) zwischen dem zu prüfenden und dem daran angrenzenden Bereich undicht ist, wenn aus dem zu prüfenden Bereich Druckluft in den angrenzenden Bereich entweicht.

6. Verfahren nach einem der Ansprüche 1 bis 5, wobei der zeitliche Verlauf des Luftdrucks in dem zu prüfenden Bereich mit dem zeitlichen Verlauf des Luftdrucks in einem bzw. in dem mindestens einen daran angrenzenden Bereich verglichen wird und anhand des Vergleichs bestimmt wird, ob ein Druckabfall in dem zu prüfenden Bereich
ausschließlich durch Entweichen von Druckluft in den daran angrenzenden Bereich oder
ausschließlich durch Entweichen von Druckluft in die Umgebung und/oder andere angrenzende Bereiche oder
teilweise durch Entweichen von Druckluft in den angrenzenden Bereich und in andere angrenzende Bereiche und/oder die Umgebung
zustande kommt.

7. Verfahren nach einem der Ansprüche 1 bis 6, wobei die Prüffahrt umfasst, dass anhand von Prüfdaten eines Prüfungsschritts der Prüffahrt automatisch, beispielsweise mittels einer Steuereinrichtung (15), bestimmt wird, welcher Prüfungsschritt als nächstes durchzuführen ist, wobei insbesondere Entscheidungsregeln hinterlegt sind, die auf die Prüfdaten angewendet werden.

8. Verfahren nach einem der Ansprüche 1 bis 7, wobei die Prüffahrt zur Leckage-Erkennung eine Prüfung der Dichtigkeit von Domdruckregelventilen (7, 10) und/oder eine Prüfung der Dichtigkeit von Blasblockventilen (8, 11) von Behandlungsstationen (2) der Vorrichtung (1) und/oder eine Prüfung eines Druckluftverteilers (5) und/oder eine Prüfung eines Niederdruckbereichs (12) umfassen.

9. Vorrichtung (1) zum Umformen von Behälter-Vorformlingen umfassend eine Druckluftquelle (3) und ein Druckluftsystem, das an die Druckluftquelle (3) angeschlossen ist und mindestens zwei fluidisch verbundene und mittels Absperrelementen (7, 10, 13, 8, 11, 14) voneinander und/oder von der Umgebung abtrennbare Bereiche umfasst,
**gekennzeichnet durch**
eine Steuereinrichtung (15), die zum Durchführen eine Leckage-Prüffahrt ausgebildet ist, indem sie mindestens eines der Absperrelemente (7, 10, 13, 8, 11, 14) und/oder die Druckluftzufuhr in das Druckluftsystem derart steuert, dass für jeden Bereich separat bestimmbar ist, ob daraus Druckluft entweicht,
wobei die Prüffahrt umfasst, dass der jeweils zu prüfende Bereich mit Druckluft beaufschlagt und von den anderen Bereichen und der Umgebung abgetrennt wird und dass, während der zu prüfende Bereich abgetrennt ist, der zeitliche Verlauf des Luftdrucks in dem zu prüfenden Bereich oder in einem bzw. dem mindestens einen an den zu prüfenden Bereich angrenzenden Bereich mittels Messwerten von einem oder mehreren in dem zu prüfenden bzw. in dem angrenzenden Bereich angeordneten Drucksensoren (18) bestimmt wird,
wobei die Vorrichtung zusätzlich eine Datenverbindung zwischen dem mindestens einen Drucksensor und der Steuereinrichtung (15) umfasst, wobei die Vorrichtung (1) insbesondere derart ausgebildet ist, dass die Steuereinrichtung (15) über die Datenverbindung Messwerte von dem mindestens einen Drucksensor (18) empfängt.

10. Vorrichtung (1) nach Anspruch 9, wobei die Leckage-Prüffahrt automatisch durchgeführt wird.

11. Vorrichtung (1) nach Anspruch 9 oder 10, wobei die Steuereinrichtung (15) derart ausgebildet ist, dass sie ein Öffnen oder Schließen der Absperrelemente (7, 10, 13, 8, 11, 14) und/oder einen Betrieb einer Druckluftquelle (3) und/oder das Einstellen von Ventilen (4) der Druckluftquelle (3) oder Ventilen zwischen der Druckluftquelle (3) und dem Druckluftsystem steuert.

12. Vorrichtung (1) nach einem der Ansprüche 9 bis 11, umfassend mindestens einen Drucksensor (18) in mindestens einem der Bereiche zum Erfassen des Luftdrucks in diesem Bereich.

13. Verwendung der Vorrichtung (1) nach einem der Ansprüche 9 bis 12 zur Durchführung des Verfahrens nach einem der Ansprüche 1 bis 7.

## Claims

1. Method for leakage detection in a device (1) for shaping container preforms comprising a compressed air system which is connected to a compressed air source (3) and comprises at least two fluidically connected regions that can be separated from each other and/or from the environment by shut-off elements (7, 10, 13, 8, 11, 14),
**characterized by**
a leakage test run being conducted by a control device (15), in which at least one of said shut-off elements (7, 10, 13, 8, 11, 14) and/or the compressed air supply into said compressed air system is controlled in such a way that it can be determined separately for each region whether compressed air escapes therefrom,
where the test run comprises that the region to be tested is pressurized with compressed air and separated from the other regions and the environment and that, while the region to be tested is separated, the air pressure in the region to be tested or in a or the at least one region adjoining the region to be tested is determined over time by way of measurement values from one or more pressure sensors (18) arranged in said region to be tested or in the adjoining region, and wherein the control device (15) receives the measurement values of the one or more pressure sensors (18) via a data connection.

2. Method according to claim 1, where the leakage test run is conducted in an automated manner.

3. Method according to claim 2, comprising a step of determining, in which it is determined that compressed air escapes from the region to be tested when the air pressure in said region drops, for example in a given measuring period, below a predetermined limit value and/or drops at a rate greater than a predetermined limit value, and/or if the ratio of the pressure loss and a predetermined pressure value, for example, a target pressure value, or a measured pressure value, for example, the pressure value at the beginning of the measurement, is greater than a predetermined limit value.

4. Method according to claim 2 or 3, comprising a step of determining, in which it is determined that compressed air escapes from the region to be tested into an adjoining region when the air pressure in the adjoining region increases, for example, above a predetermined limit value and/or increases at a rate greater than a predetermined limit value, and/or if the ratio of the pressure increase and a predetermined pressure value, for example, a target pressure value, or a measured pressure value, for example, the pressure value at the beginning of the measurement, is greater than a predetermined limit value.

5. Method according to claim 4, comprising a step of determining, in which it is determined that said shut-off element (7, 10, 13) is leaking between the region to be tested and the adjoining region when compressed air escapes from the region to be tested into the adjoining region.

6. Method according to one of the claims 1 to 5, wherein the air pressure over time in the region to be tested is compared with the air pressure over time in a or in the at least one adjoining region, and it is determined on the basis of the comparison whether a pressure drop in the region to be tested is caused
exclusively by compressed air escaping into the adjoining region or
exclusively by compressed air escaping into the environment and/or other adjoining regions or
in part by compressed air escaping into the adjoining region and into other adjoining regions and/or the environment.

7. Method according to one of the claims 1 to 6, wherein the test run comprises that it is determined in an automated manner on the basis of test data of a test step of the test run, for example by way of a control device (15), which test step is to be executed next, where in particular decision rules are stored and applied to said test data.

8. Method according to one of the claims 1 to 7, where the test run for leakage detection comprises a test for the tightness of dome pressure control valves (7, 10) and/or a test for the tightness of blowing block valves (8, 11) of treatment stations (2) of said device (1) and/or a test of a compressed air distributor (5) and/ or a test of a low pressure region (12).

9. Device (1) for shaping container preforms comprising a compressed air source (3) and a compressed air system which is connected to said compressed air source (3) and comprises at least two fluidically connected regions that can be separated from each other and/or from the environment by shut-off elements (7, 10, 13, 8, 11, 14),
**characterized by**
a control device (15) which is configured to conduct a leakage test run by controlling at least one of said shut-off elements (7, 10, 13, 8, 11, 14) and/or the compressed air supply into said compressed air system in such a way that it can be determined separately for each region whether compressed air escapes therefrom,
where the test run comprises that the region to be tested is pressurized with compressed air and separated from the other regions and the environment and that, while the region to be tested is separated, the air pressure in the region to be tested or in a or the at least one region adjoining the region to be tested is determined over time by way of measurement values from one or more pressure sensors (18) arranged in said region to be tested or in the adjoining region,
wherein the device further comprises a data connection between said at least one pressure sensor and said control device (15), where said device (1) is in particular configured such that said control device (15) receives measured values from said at least one pressure sensor (18) via said data connection.

10. Device (1) according to claim 9, where the leakage test run is conducted in an automated manner.

11. Device (1) according to claim 9 or 10, wherein said control device (15) is adapted such that it controls the opening or closing of said shut-off elements (7, 10, 13, 8, 11, 14) and/or an operation of a compressed air source (3) and/or the adjustment of valves (4) of said compressed air source (3) or valves between said compressed air source (3) and said compressed air system.

12. Device (1) according to one of the claims 9 to 11, comprising at least one pressure sensor (18) in at least one of the regions for recording the air pressure in this region.

13. Use of the device (1) according to one of the claims 9 to 12 for carrying out the method according to one of the claims 1 to 7.

## Revendications

1. Procédé de détection de fuites dans un dispositif (1) permettant le formage de préformes de récipients, comprenant un système à air comprimé raccordé à une source d'air comprimé (3) et comprenant au moins deux régions en communication fluidique pouvant être séparées l'une de l'autre et/ou de l'environnement au moyen d'éléments formant barrière (7, 10, 13, 8, 11, 14),
**caractérisé par**
une routine de test de fuite mise en oeuvre par un dispositif de commande (15), lors de laquelle au moins un des éléments formant barrière (7, 10, 13, 8, 11, 14) et/ou l'alimentation en air comprimé dans le système à air comprimé sont commandé(s) de telle manière qu'il est possible de déterminer de manière séparée pour chaque région si de l'air comprimé s'en échappe,
dans lequel la routine de test implique que la région à tester respectivement est alimentée en air comprimé et
est séparée des autres régions et de l'environnement et que, tandis que la région à tester est séparée, l'évolution temporelle de la pression d'air dans la région à tester ou dans une ou la au moins une région adjacente à la région à tester est déterminée au moyen de valeurs de mesure d'un ou plusieurs capteur(s) de pression (18) agencé(s) dans la région à tester ou dans la région adjacente, et dans lequel le dispositif de commande (15) reçoit les valeurs de mesure du au moins un capteur de pression (18) par l'intermédiaire d'une connexion de données.

2. Procédé selon la revendication 1, dans lequel la routine de test de fuite est mise en oeuvre de manière automatique.

3. Procédé selon la revendication 2, comprenant une étape de détermination lors de laquelle il est déterminé que de l'air comprimé s'échappe de la région à tester lorsque la pression d'air chute dans ladite région, par exemple descend en dessous d'une valeur limite prédéfinie pendant une période de mesure prédéfinie et/ou descend à une vitesse supérieure à une valeur limite prédéfinie, et/ou lorsque le rapport entre la perte de pression et une valeur de pression prédéfinie, par exemple une valeur de pression de consigne, ou une valeur de pression mesurée, par exemple la valeur de pression au début de la mesure, est supérieur à une valeur limite prédéfinie.

4. Procédé selon l'une quelconque des revendications 2 ou 3, comprenant une étape de détermination lors de laquelle il est déterminé que de l'air comprimé s'échappe de la région à tester dans une région adjacente à celle-ci lorsque la pression d'air augmente dans la région adjacente à celle-ci, par exemple augmente au-dessus d'une valeur limite prédéfinie et/ou augmente à une vitesse supérieure à une valeur limite prédéfinie, et/ou lorsque le rapport entre l'augmentation de pression et une valeur de pression prédéfinie, par exemple une valeur de pression de consigne, ou une valeur de pression mesurée, par exemple la valeur de pression au début de la mesure, est supérieur à une valeur limite prédéfinie.

5. Procédé selon la revendication 4, comprenant une étape de détermination lors de laquelle il est déterminé que l'élément formant barrière (7, 10, 13) n'est pas étanche entre la région à tester et la région adjacente à celle-ci lorsque de l'air comprimé s'échappe de la région à tester dans la région adjacente.

6. Procédé selon l'une quelconque des revendications 1 à 5, dans lequel l'évolution temporelle de la pression d'air dans la région à tester est comparée à l'évolution temporelle de la pression d'air dans une ou la au moins une région adjacente à celle-ci et il est déterminé sur la base de ladite comparaison si une chute de pression se produit dans la région à tester
exclusivement du fait d'un échappement d'air comprimé dans la région adjacente à ladite région à tester ou
exclusivement du fait d'un échappement d'air comprimé dans l'environnement et/ou dans d'autres régions adjacentes ou
en partie du fait d'un échappement d'air comprimé dans la région adjacente et dans d'autres régions adjacentes et/ou dans l'environnement.

7. Procédé selon l'une quelconque des revendications 1 à 6, dans lequel la routine de test comprend le fait de déterminer automatiquement, à l'aide des données de test d'une étape de test de la routine de test, par exemple à l'aide d'un dispositif de commande (15), quelle étape de test doit être mise en oeuvre ensuite, dans lequel des règles de décision appliquées aux données de test sont en particulier enregistrées.

8. Procédé selon l'une quelconque des revendications 1 à 7, dans lequel la routine de test permettant une détection de fuite comprend un test de l'étanchéité des soupapes de régulation de pression à dôme (7, 10) et/ou un test de l'étanchéité des soupapes à bloc de surpression (8, 11) de postes de traitement (2) du dispositif (1) et/ou un test d'un répartiteur d'air comprimé (5) et/ou un test d'une plage de basse pression (12).

9. Dispositif (1) permettant le formage de préformes de récipients, comprenant une source d'air comprimé (3) et un système à air comprimé raccordé à la source d'air comprimé (3) et comprenant au moins deux régions en communication fluidique pouvant être séparées l'une de l'autre et/ou de l'environnement au moyen d'éléments formant barrière (7, 10, 13, 8, 11, 14),
**caractérisé par**
un dispositif de commande (15) conçu pour mettre en oeuvre une routine de test de fuite en commandant au moins l'un des éléments formant barrière (7, 10, 13, 8, 11, 14) et/ou l'alimentation en air comprimé dans le système à air comprimé de telle manière qu'il est possible de déterminer séparément pour chaque région si de l'air comprimé s'en échappe,
dans lequel la routine de test implique que la région à tester respectivement est alimentée en air comprimé et est séparée des autres régions et de l'environnement et que, pendant que la région à tester est séparée, l'évolution temporelle de la pression d'air dans la région à tester ou dans une ou la au moins une région adjacente à la région à tester est déterminée au moyen de valeurs de mesure d'un ou plusieurs capteur(s) de pression (18) agencé(s) dans la région à tester ou dans la région adjacente,
dans lequel le dispositif comprend en outre une connexion de données entre le au moins un capteur de pression et le dispositif de commande (15), dans lequel le dispositif (1) est en particulier conçu de telle manière que le dispositif de commande (15) reçoit des valeurs de mesure du au moins un capteur de pression (18) par l'intermédiaire de la connexion de données.

10. Dispositif (1) selon la revendication 9, dans lequel la routine de test de fuite est mise en oeuvre de manière automatique.

11. Dispositif (1) selon la revendication 9 ou 10, dans lequel le dispositif de commande (15) est conçu de manière à commander une ouverture ou une fermeture des éléments formant barrière (7, 10, 13, 8, 11, 14) et/ou un fonctionnement d'une source d'air comprimé (3) et/ou le réglage de soupapes (4) de la source d'air comprimé (3) ou de soupapes situées entre la source d'air comprimé (3) et le système à air comprimé.

12. Dispositif (1) selon l'une quelconque des revendications 9 à 11, comprenant au moins un capteur de pression (18) dans au moins une des régions afin de détecter la pression d'air dans ladite région.

13. Utilisation du dispositif (1) selon l'une quelconque des revendications 9 à 12 afin de mettre en oeuvre le procédé selon l'une quelconque des revendications 1 à 7.
